# EUROPÄISCHE PATENTSCHRIFT

(11) **EP 2 536 581 B1**
(45) Veröffentlichungstag und Bekanntmachung des Hinweises auf die Patenterteilung: **26.11.2014**
(21) Anmeldenummer: 11705442.9
(22) Anmeldetag: 10.02.2011
(51) Int. Cl.: F16C 1/20, B60J 7/057, F16C 1/14

(54) **STEIGUNGSKABEL MIT STABILISIERTEM MITNEHMER**
RISING CABLE WITH STABILIZED DRIVER
CÂBLE D'ENTRAÎNEMENT À ENTRAÎNEUR RENFORCÉ

(30) Priorität: 17.02.2010 DE 102010008365
(43) Veröffentlichungstag der Anmeldung: 26.12.2012
(73) Patentinhaber: Gemo D.G. Moritz GmbH & Co. Kg, 13407 Berlin (DE)
(72) Erfinder: STENZEL, Klaus, 12209 Berlin (DE)
(74) Vertreter: Hausfeld, Norbert
(86) Internationale Anmeldenummer: PCT/EP2011/000626
(87) Internationale Veröffentlichungsnummer: WO 2011/101105

(56) Entgegenhaltungen:
- DE-A1-102006 021 650
- JP-U- 52 051 974
- US-A- 2 484 485
- US-A- 3 846 033
- US-A- 4 923 213

## Beschreibung

Die Erfindung betrifft ein Steigungskabel mit einem Mitnehmer. Ein Steigungskabel weist einen flexiblen Kern auf, der üblicherweise mehrlagig aus gegenläufig gewickelten Drähten aufgebaut ist. Um den Kern ist eine Wendel aus Draht in fester Pressung gewickelt und zwar mit einem erheblichen Gangabstand zwischen den Windungen. Ein Mitnehmer dient zur Ankoppelung an ein anzutreibendes Element.

Wichtiges Anwendungsgebiet sind Antriebe für die Schiebedächer von Kraftfahrzeugen und ähnliche Anwendungen wie zum Beispiel der Antrieb von Lichtschutzjalousien in Kraftwagen.

Bei diesen Anwendungen wird ein Schiebeelement, also zum Beispiel das bewegliche Schiebedach an beiden Seiten mit je einem Mitnehmer eines Steigungskabels gekoppelt. Die Steigungskabel verlaufen um den Ausschnitt des Schiebedaches herum zu einem gemeinsamen Antrieb, an dem sie mit einem Zahnrad in Eingriff stehen, das in die Windungsabstände des Steigungskabels eingreift und diese wie eine Zahnstange betätigt.

Schwierig ist dabei die Konstruktion des Mitnehmers, der bei kostengünstiger Massenfertigung hohe Kräfte übertragen muss. Bekannte Mitnehmer an Steigungskabeln bestehen entweder aus Metall und werden mittels Kaltverformung angecrimpt oder sie bestehen aus Kunststoff, der im Spritzgussverfahren um den Endbereich des Steigungskabels gegossen wird. In beiden Fällen sind die Festigkeitsergebnisse unbefriedigend, wobei bei Kunststoff insbesondere die geringe Materialbelastbarkeit stört.

Mitnehmer, die in üblicher Bauform seitlich von dem Steigungskabel abstehende Koppelglieder aufweisen, haben in dem das Steigungskabel umschließenden Hauptkörper genug Platz, um den Kern des Steigungskabels über die volle Länge durch den Hauptkörper laufen zu lassen, so dass dieser eine Versteifung des Mitnehmers bewirkt. Weist der Mitnehmer jedoch zur Koppelung eine seitliche Ausnehmung auf, so bildet diese auch eine Schwächung des Mitnehmers und eine Querschnittsverengung, so dass der Kern des Steigungskabel nicht durch den Längenbereich der seitlichen Ausnehmung hindurch laufen kann. Hier liegt also in dem neben der Ausnehmung verbleibenden Querschnitt des Mitnehmers nur Gussmaterial vor, das bei höheren Kräften bruchgefährdet sein kann.

Aus der DE 29 12 666 A1, der DE 10 2006 021 650 A1 und der US 4 038 881 A sind jeweils Steigungskabel mit einem an ihrem einen Ende befestigten Mitnehmer bekannt, der zur Kopplung an ein in Achsrichtung des Steigungskabels bewegbares Schiebelement ausgebildet ist, wobei der Mitnehmer als um den Endbereich des Steigungskabels gegossener bzw. spritgegossener Körper ausgebildet ist und eine zur Koppelung ausgebildete seitliche Ausnehmung oder Erweiterung aufweist, die in Achsrichtung jenseits des Endes des Steigungskabels angeordnet ist. Es besteht bei diesem Stand der Technik der im vorhergehenden Absatz angesprochene Nachteil der Bruchgefährdung bei höheren Kräften.

Die Aufgabe der vorliegenden Erfindung besteht darin, Steigungskabel hinsichtlich der Kosten und der Stabilität der Mitnehmer zu verbessern.

Diese Aufgabe wird mit den Merkmalen des Anspruches 1 gelöst.

Erfindungsgemäß ist der Mitnehmer als Metallgusskörper ausgebildet. Metallguss ist eine bewährte Gießtechnik und zeigt wesentlich höhere Festigkeitswerte als ein Kunststoffspritzgusskörper oder zum Beispiel angecrimpte Blechteile. Ein weiterer Vorteil besteht darin, dass der Metallguss bei höheren Temperaturen erfolgt, bei denen Kunststoffmaterialien bereits schmelzen. Beim Gießen eventuell störende Kunststoffanteile an dem Steigungskabel, wie zum Beispiel zwischen die Windungen der Wendel gewickelte Flockgarnfäden, brauchen vor dem Guss nicht entfernt zu werden. Der geschwächte Bereich neben der Ausnehmung ist mit einem eingebetteten achsparallelen Stift versehen, der als Armierung dient und in dazu geeigneter Weise zum Beispiel aus Stahl ausgebildet sein kann. Zur besseren Verbindung und Kraftübertragung mit dem Gussmaterial kann der Stift zum Beispiel mit gerillter Oberfläche versehen sein.

Ein zusätzliches Problem ist der Antrieb eines Schiebeelementes von zwei Seiten her mit Steigungskabeln, die ein gewisses Antriebsspiel beim Zahnradeingriff haben. Es wird somit stets eine Seite des Schiebeelementes etwas weiter bewegt als die andere. Diese geringfügigen Unterschiede im Millimeterbereich können aber durchaus das Auge des Betrachters stören, insbesondere bei hochpreisigen Limousinen. Vorteilhaft ist daher gemäss Anspruch 2 am Mitnehmer eine diesen überragende Feder befestigt, die hervorragend zur Beseitigung des Schiefstellungsproblemes geeignet ist. Der Schiebedachantrieb kann so konstruiert sein, dass in der Endstellung die beiden Steigungskabel endseitig mit dem Mitnehmer an Karosseriepunkten anschlagen. Beim Anlaufen gegen den Anschlag geben die Federn etwas nach und erlauben somit, dass die nachlaufende Seite der vorlaufenden Seite noch etwas folgen kann, bis das Schiebedach gerade steht. Dieses Ergebnis wird mit einer äußerst einfachen Konstruktion erreicht, die hochkomplizierten Spielausgleichskonstruktionen überlegen ist. Die Feder kann an dem Mitnehmer auf unterschiedliche Arten befestigt sein, beispielsweise durch Verschraubung oder dergleichen. Vorteilhaft ist sie jedoch durch Umgießen befestigt, was die Konstruktion weiter vereinfacht und verbilligt.

In der zum Metallguss benötigten Form ist der zu gießende Endbereich des Steigungskabels einzulegen und ebenso der zu gießende Bereich der Feder. Vorteilhaft gemäß Anspruch 3 ist die Feder jedoch auf einen freien Endbereich des Kernes des Steigungskabels aufgesteckt und kann dort vormontiert werden, so dass sich der Einlegevorgang in die Druckgussform und somit der Verfahrensablauf beschleunigt und verbilligt.

Zur Herstellung des Metallgusskörpers sind unterschiedliche geeignete Techniken verwendbar, wie z.B. Metallumspritzen von Kunststoffrohlingen, Sintern oder Metallpulverspritzgiessen. Vorteilhaft gemäss Anspruch 4 wird jedoch die Zinkdruckgusstechnik verwendet, die besonders für Großserien, wie sie im Automobilbau benötigt werden, bei niedrigen Kosten sehr gut geeignet ist.

In der Zeichnung ist die Erfindung beispielhaft und schematisch dargestellt. Es zeigen:
- Fig. 1: eine Seitenansicht des Endbereiches eines Steigungskabels mit Mitnehmer und Feder und
- Fig. 2: in entsprechender Darstellung wie Figur 1 eine Ausführungsvariante.

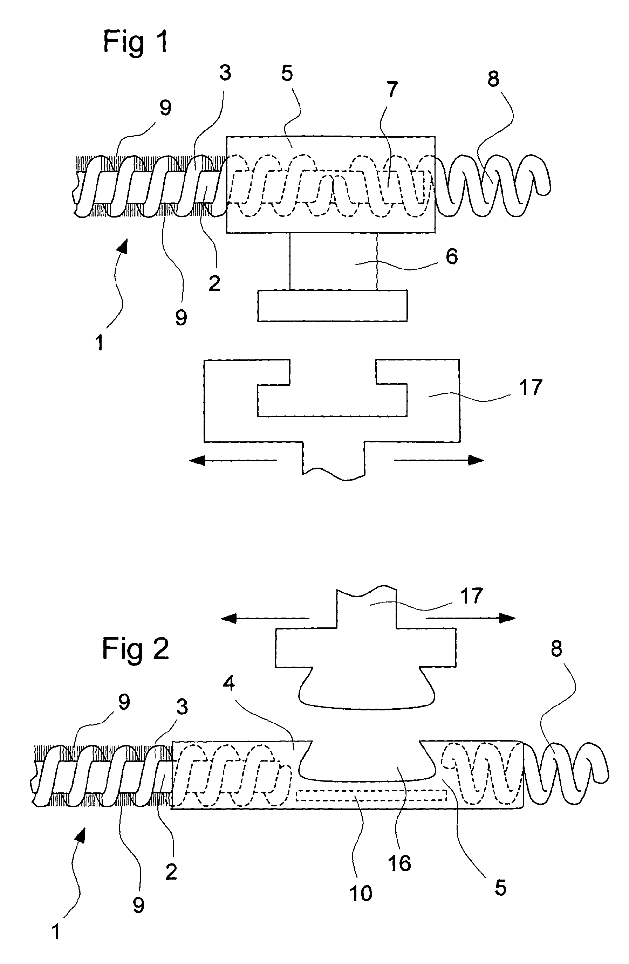

Figur 1 zeigt ein nicht erfindungsgemäßes Steigungskabel 1 mit einem flexiblen Kern 2, der zum Beispiel aus mehrlagig gegenläufig übereinander gewickelten Drähten gebildet ist. Auf den Kern 2 ist eine Wendel 3 aus geeignetem, dickerem Draht fest aufgewickelt. Das derart ausgebildete Steigungskabel kann wie eine Zahnstange verwendet werden, ist dabei jedoch von rundem Querschnitt und biegbar.

Im gestrichelt dargestellten Endbereich des Steigungskabels 1 ist dieses in einen Mitnehmer 5 eingebettet, der als Zinkdruckgusskörper ausgebildet ist. Seitlich abstehend vom Mitnehmer 5 ist ein Koppelglied 6 ausgebildet, das zum formschlüssigen seitlichen Angriff an einem Schiebeelement 17 eines nicht dargestellten Schiebedaches bestimmt ist.

Im dargestellten Endbereich des Steigungskabels 1 ist die Wendel 3 entfernt. Auf den freien Endbereich 7 des Kernes 2 ist eine Feder 8 aufgesteckt, die in den Hauptkörper 4 des Mitnehmers 5 eingegossen ist.

Wie Figur 1 zeigt, ist das Steigungskabel 1 außerhalb des Mitnehmers 5 zwischen den Windungen der Wendel 3 mit Härchen 9 beflockt. Diese können zum Beispiel durch Einwickeln von Flockgarnfäden dort angeordnet sein. Sie dienen der Geräuschbekämpfung bei Bewegung des Steigungskabels 1 in ihrer in der Figur nicht dargestellten Führungsbahn.

Bei der Herstellung der in Figur 1 dargestellten Konstruktion kann ausgehend von einem endlosen Steigungskabel dieses abgelängt und dann im freien Endbereich 7 von dem dortigen Stück der Wendel 3 befreit werden. Sodann wird die vorgefertigte Feder 8 aufgesteckt. In dieser Konfiguration kann das Einlegen in die zur Herstellung des Druckgusses erforderliche Form erfolgen, so dass nur die beschriebene vorher zusammengesteckte Baugruppe eingelegt werden muss und das Einlegen separater Teile entfällt.

Die Härchen 9 können von dem Steigungskabel 1 im zu umgießenden Endbereich entfernt werden. Sie können jedoch auch auf dem Steigungskabel verbleiben, da sie bei den hohen Temperaturen des verwendeten Zinkspritzgusses störungsfrei weggeschmolzen werden.

Figur 2 zeigt eine erfindungsgemäße Ausführungsvariante, bei der, soweit möglich, die gleichen Bezugszeichen verwendet werden.

Außerhalb des Mitnehmers 5 entspricht das Steigungskabel 1 vollständig der Konstruktion der Figur 1. Der Mitnehmer 5 ist wiederum auf den Endbereich des Steigungskabels 1 als Zinkspritzgusskörper aufgegossen. Zur Koppelung des Mitnehmers ist jedoch nicht ein seitlich herausragendes Koppelglied 6 gemäß Figur 1 vorgesehen, sondern im Falle der Ausführungsform der Figur 2 eine zum Eingriff mit einem Mitnehmer 17 ausgeformte seitliche Ausnehmung 16, die den Querschnitt des Gusskörpers 7 an dieser Stelle schwächt. Da an der Stelle der seitlichen Ausnehmung 16 der Gusskörper im Querschnitt stark reduziert ist, kann das Steigungskabel 1 nur im Längenbereich bis zur Ausnehmung 16 hin eingegossen werden.

Die Feder 8 ist entsprechend wie bei der Ausführungsform der Figur 1 in den Körper 7 eingegossen, jedoch erst in dem Bereich jenseits der Ausnehmung 16.

Der verbleibende Querschnitt des Mitnehmers 5 neben der Ausnehmung 16 ist bruchgefährdet. Um hier Störungen zu vermeiden, ist in den Mitnehmer 5 ein Stift 10 eingegossen, der beispielsweise als Stahlstift ausgebildet sein kann und dem Mitnehmer 5 in diesem schwachen Bereich ausreichende Festigkeit vermittelt. Der Stift 10 kann zur besseren Verzahnung mit dem umgebenden Gussmaterial geeignet geformt sein oder eine strukturierte Oberfläche haben, beispielsweise als Gewindestange ausgebildet sein.

Bevorzugtes Anwendungsgebiet der dargestellten Konstruktionen ist ein nicht dargestellter Schiebedachantrieb für Pkw. Am vorderen Querrand des das Schiebedach aufnehmenden Dachausschnittes ist ein Elektromotor angeordnet, der mit einem Zahnrad zwei mit dem Zahnrad kämmende erfindungsgemässe Steigungskabel antreibt, die von dort zu beiden Seiten des Schiebedaches parallel am Rand des Ausschnittes entlang laufen und mit ihren Mitnehmern 5 rechts und links an das Schiebedach angekoppelt sind.

Die Mitnehmer 5 laufen in der Endstellung der Bewegung des Schiebedaches gegen einen Karosserieanschlag. Da das Antriebszahnrad mit den beiden Steigungskabeln in etwas unterschiedlichem Spielangriff steht, erreicht die eine Seite des Schiebedaches den Anschlag eher als die andere. Der Unterschied liegt im Millimeterbereich, kann aber stören.

Bei der in den Figuren 1 und 2 dargestellten Konstruktion ist die Feder 8 den jeweiligen Mitnehmer 5 überragend derart angeordnet, dass sie gegen den Anschlag läuft. Einer der beiden Mitnehmer läuft zuerst gegen den Anschlag. Seine Feder 8 federt ein und erlaubt es, dass auch der andere Mitnehmer noch etwas vorlaufen kann, bis das Schiebedach wieder gerade steht.

Die Feder 8 kann anders als im dargestellten Beispiel auch mit anderer Drahtstärke und anderer Steigung als die Wendel 3 ausgebildet sein und auch gleichgängig wie diese gewickelt sein.

Die Feder 8 kann auch entfallen.

## Patentansprüche

1. Steigungskabel (1) mit einem an seinem einen Ende befestigten Mitnehmer (5), der zur Koppelung an ein in Achsrichtung des Steigungskabels (1) bewegbares Schiebelement (17) ausgebildet ist, wobei der Mitnehmer (5) eine zur Koppelung ausgebildete seitliche Ausnehmung (16) aufweist, die in Achsrichtung jenseits des Endes des Steigungskabels (1) angeordnet ist, **dadurch gekennzeichnet, dass** der Mitnehmer (5) als um den Endbereich des Steigungskabels (1) gegossener Metallgusskörper ausgebildet ist, wobei in dem neben der Ausnehmung (16) verbleibenden Querschnitt des Mitnehmers (5) ein achsparalleler Stift (10) eingegossen ist.

2. Steigungskabel nach Anspruch 1, **dadurch gekennzeichnet, dass** an dem Mitnehmer (5) eine diesen in Richtung der Bewegung überragende und bei Endanschlag der Bewegung nachgebende Feder (8) durch Umgießen befestigt ist.

3. Steigungskabel nach Anspruch 2, **dadurch gekennzeichnet, dass** die Feder (8) als koaxial zum Steigungskabel (1) ausgebildete Schraubenfeder ausgebildet und mit ihrem umgossenen Bereich auf einem das Ende der Wendel (3) überragenden freien Endbereich (7) des Kernes (2) des Steigungskabels (1) aufgesteckt ist.

4. Steigungskabel nach einem der vorhergehenden Ansprüche, **dadurch gekennzeichnet, dass** der Metallgusskörper als Zinkdruckgusskörper ausgebildet ist.

## Claims

1. A rising cable (1) comprising a follower (5), which is fastened at its one end and which is embodied for coupling to a sliding element (17), which can be moved in axial direction of the rising cable (1), wherein the follower (5) encompasses a lateral recess (16), which is embodied for coupling and which is arranged in axial direction on the other side of the end of the rising cable (1), **characterised in that** the follower (5) is embodied as metal cast body, which is cast around the end region of the rising cable (1), wherein an axially parallel pin (10) is cast integrally in the cross section of the follower (5), which remains next to the recess (16).

2. The rising cable according to claim 1, **characterised in that** a spring (8), which projects above the follower (5) in the direction of the movement and which yields in response to the end stop of the movement, is fastened to said follower by means of recasting. >

3. The rising cable according to claim 2, **characterised in that** the spring (8) is embodied as helical spring, which is embodied coaxially to the rising cable (1) and is attached with its recast region onto a free end region (7) of the core (2) of rising cable (1), which projects above the end of the coil (3).

4. The rising cable according to any one of the preceding claims, **characterised in that** the metal cast body is embodied as zinc die-cast body.

## Revendications

1. Câble d'entraînement (1) avec, fixé à l'une de ses extrémités, un entraîneur (5) conformé de façon à pouvoir s'accoupler à un élément coulissant (17) pouvant se déplacer dans le sens de l'axe du câble d'entraînement (1), l'entraîneur (5) présentant un évidement latéral (16) disposé dans le sens axial au-delà de l'extrémité du câble d'entraînement (1), **caractérisé en ce que** l'entraîneur (5) est réalisé sous forme de pièce en métal coulée autour de la partie d'extrémité du câble d'entraînement (1), une cheville (10) parallèle à l'axe étant coulée dans la section restante à côté de l'évidement (16) de l'entraîneur (5).

2. Câble d'entraînement selon la revendication 1, **caractérisé en ce que** l'entraîneur (5) est muni d'un ressort (8) faisant saillie dans le sens du déplacement et cédant au niveau de la butée de fin de course, l'entraîneur étant coulé autour du ressort pour le fixer.

3. Câble d'entraînement selon la revendication 2, **caractérisé en ce que** le ressort (8) est un ressort à boudin coaxial au câble d'entraînement (1) et dont la partie noyée est enfichée sur une extrémité libre (7) de l'âme (2) du câble d'entraînement (1) émergeant de l'extrémité de la spirale (3).

4. Câble d'entraînement selon l'une des revendications précédentes, **caractérisé en ce que** la pièce en métal coulée est réalisée sous forme de pièce en zinc moulé sous pression.
